# EUROPÄISCHE PATENTANMELDUNG

(11) **EP 2 409 806 A1**
(43) Veröffentlichungstag der Anmeldung: **25.01.2012**
(21) Anmeldenummer: 10007627.2
(22) Anmeldetag: 22.07.2010
(51) Int. Cl.: B23K 9/23, B23K 9/173, B23K 9/02, B23K 20/12

(54) **Verfahren zur Herstellung eines groß dimensionierten Bauteils aus Sphäroguss**

(71) Anmelder: Siemens Aktiengesellschaft, 80333 München (DE)
(72) Erfinder: Brussk, Stefan, 45479 Mülheim an der Ruhr (DE); Kern, Torsten-Ulf, Dr., 46485 Wesel (DE); Niepold, Karsten, 45481 Mülheim (DE); Sheng, Shilun, Dr., 46149 Oberhausen (DE)

(57) **Zusammenfassung**

Ein Verfahren zur Herstellung eines Bauteils aus Sphäroguss weist die Schritte auf: Konstruktion des Bauteils (1) derart, dass das Bauteil (1) aus einer Mehrzahl an Bauteilkomponenten (2, 3) zusammengesetzt ist, die unter Ausbilden von Teilfugen (8) aneinandergelegt sind sowie so dimensioniert und gestaltet sind, dass sie ohne kritische Fehlstellen in ihrem Material aus Späroguss gießbar sind; paarweises Bereitstellen der Bauteilkomponenten (2, 3), bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird; Anlegen der zweiten Bauteilkomponente (3) mit ihrem Randabschnitt (5) an den Randabschnitt (4) der ersten Bauteilkomponente (2), so dass die Randkanten (6, 7) aneinander liegen; Verschweißen der Randabschnitte (4, 5), so dass die von den Randabschnitten (4, 5) gebildete Teilfuge (8) verschweißt ist und dadurch die erste und die zweite Bauteilkomponente (2, 3) miteinander befestigt sind, wodurch die erste und die zweite Bauteilkomponente (2, 3) zumindest teilweise das Bauteil (1) bilden, wobei beim Verschweißen ein MSG-Schweißverfahren mit einem energiereduzierten Kurzlichtbogen, der mittels einer beim Schweißen abschmelzenden Elektrode erzeugt wird und die Schmelze der Elektrode den Sphäroguss der Randkanten (6, 7) auflegiert, oder ein Reibrührschweißverfahren verwendet wird, mit dem die Randabschnitte (4, 5) bei minimalem Energieeintrag verschweißt werden, so dass ein Strukturzerfall des Sphäroguss beim Verschweißen der Randabschnitte (4, 5) unterbleibt.

## Beschreibung

Die Erfindung betrifft ein Verfahren zur Herstellung eines groß dimensionierten Bauteils aus Sphäroguss.

Sphäroguss ist ein Gusseisen mit Kugelgraphit, mit dem kostengünstig serienmäßig groß dimensionierte Bauteile hergestellt werden können. Beispielsweise ist herkömmlich das Gehäuse einer Dampfturbine in einem bestimmten Temperaturbereich und je nach Bauart aus Sphäroguss gefertigt. Die geometrischen Ausmaße einer Dampfturbine im oberen Leistungsbereich, wie sie beispielsweise in Dampfkraftwerken zur Stromerzeugung eingesetzt werden, sind jedoch so groß, dass beim Gießen des Sphäroguss Probleme auftreten können. So ist beispielsweise die Wahrscheinlichkeit hoch, dass in einem derartigen Dampfturbinengehäuse Unregelmäßigkeiten und Fehlstellen auftreten, die die Festigkeit des Dampfturbinengehäuses beeinträchtigen. Diese Unregelmäßigkeiten und Fehlstellen können je nach Lage in dem Bauteil und Funktion der betroffenen Stellen nicht tolerabel sein. Dadurch ist die maximal zulässige Größe der Gehäusebauteile aus Sphäroguss nach oben begrenzt. Abhilfe würde ein Gehäusebauteil schaffen, das aus mehreren kleinen, gießtechnisch unkritischen Teilen zusammengesetzt ist. Voraussetzung hierfür wäre allerdings, dass diese Teile miteinander verschweißt ein Gehäuse bilden können. Die Teile wären über großflächige Schweißverbindungen miteinander zu verbinden, wofür ein geeignetes Schweißverfahren notwendig wäre. Allerdings ist kein Fertigungsverfahren bekannt, mit dem derart großflächige Schweißverbindungen von Sphäroguss hergestellt werden können, ohne die Eigenschaften in der Schweißnaht wesentlich zu verschlechtern gegenüber dem Grundmaterial.

In aus Sphäroguss hergestellten Gussbauteilen treten in der Regel immer Unregelmäßigkeiten und Fehlstellen auf. Von der Größe und der Lage der Unregelmäßigkeiten und Fehlstellen hängt es ab, ob das betroffene Gussbauteil als Ausschuss verworfen werden muss. Für kleine lokale Fehlstellen sind Reparaturschweißverfahren bekannt. Ein derartiges Reparaturschweißverfahren ist beispielsweise Kaltschweißen mit einer Eisen-Nickel-Legierung. Bei dem konventionellen Kaltschweißverfahren wird jedoch eine Schweißverbindung hergestellt, deren Festigkeit unterhalb der Festigkeit des Sphäroguss liegt. Allein dadurch ist das Kaltschweißverfahren für großflächige Verbindungsschweißungen nicht geeignet. Ein anderes Verfahren ist Warmschweißen, das jedoch nur bei einer Bauteilvorwärmung im Bereich von 500 bis 600°C und eine daran anschließende Wärmenachbehandlung durchführbar ist. Das Warmschweißen ist daher sehr aufwändig und erzeugt einen Verzug des Bauteils, so dass das Warmschweißen für eine großflächige Verbindungsschweißung von Sphäroguss nicht geeignet ist.

Aufgabe der Erfindung ist es, ein Verfahren zur Herstellung eines Bauteils aus Sphäroguss zu schaffen, wobei das Bauteil große Ausmaße und dennoch eine hohe Festigkeit in allen Bereichen hat.

Das erfindungsgemäße Verfahren zur Herstellung eines Bauteils aus Sphäroguss weist die Schritte auf: Konstruktion des Bauteils derart, dass das Bauteil aus einer Mehrzahl an Bauteilkomponenten zusammengesetzt ist, die unter Ausbilden von Teilfugen aneinandergelegt sind sowie so dimensioniert und gestaltet sind, dass sie ohne kritische Fehlstellen in ihrem Material aus Sphäroguss gießbar sind; Herstellen der ersten Bauteilkomponente aus Sphäroguss und der zweiten Bauteilkomponente aus Sphäroguss, Stahlguss oder Schmiedestahl; paarweises Bereitstellen der Bauteilkomponenten, wobei eine erste der Bauteilkomponenten und eine zweite der Bauteilkomponenten zum benachbarten Aneinanderliegen vorgesehen sind, bei dem von einer Randkante eines Randabschnitts der ersten Bauteilkomponente und einer Randkante eines Randabschnitts der zweiten Bauteilkomponente eine der Teilfugen gebildet wird; Anlegen der zweiten Bauteilkomponente mit ihrem Randabschnitt an den Randabschnitt der ersten Bauteilkomponente, so dass die Randkanten aneinander liegen; Verschweißen der Randabschnitte, so dass die von den Randabschnitten gebildete Teilfuge verschweißt ist und dadurch die erste und die zweite Bauteilkomponente miteinander befestigt sind, wodurch die erste und die zweite Bauteilkomponente zumindest teilweise das Bauteil bilden, wobei beim Verschweißen ein MSG-Schweißverfahren mit einem energiereduzierten Kurzlichtbogen, der mittels einer beim Schweißen abschmelzenden Elektrode erzeugt wird und die Schmelze der Elektrode den Sphäroguss der Randkanten auflegiert, oder ein Reibrührschweißverfahren verwendet wird, mit dem die Randabschnitte bei minimalem Energieeintrag verschweißt werden, so dass ein Strukturzerfall des Sphäroguss beim Verschweißen der Randabschnitte unterbleibt.

Somit ist das Bauteil aus den mehreren Bauteilkomponenten gebildet, wobei in den Bauteilkomponenten unakzeptable Unregelmäßigkeiten und Fehlstellen im Sphäroguss unterbunden sind. Dadurch ist bei der Konstruktion des Bauteils prinzipiell aufgrund der Verwendung des Sphäroguss keine Obergrenze hinsichtlich der Festigkeit des Bauteils und der finalen Größe gesetzt. Als Strukturveränderung sind insbesondere Aufhärtungen in der Wärmeeinflusszone sowie die Zerstörung der Grundwerkstoffmatrix durch hohe Wärmeeinbringung zu verstehen.

Erfindungsgemäß werden die Bauteilkomponenten mittels eines MSG-Schweißverfahrens mit einem energiereduzierten Kurzlichtbogens zusammengefügt, wobei eine beim Schweißen abschmelzende Elektrode verwendet wird und die Schmelze der Elektrode den Sphäroguss der Randkanten auflegiert. Durch das derart durchgeführte Schweißverfahren ist eine großflächige Verbindungsschweißung von den Sphärogussbauteilen ermöglicht. Diese Schweißverbindung hat mechanische Eigenschaften, die vorteilhaft denen des Sphäroguss ähnlich sind. Dadurch kann das Bauteil groß dimensioniert sein, wobei das Bauteil aus kleinen, gießtechnisch unkritischen Bauteilkomponenten aufgebaut ist. Somit ist die Wahrscheinlichkeit von unakzeptablen Unregelmäßigkeiten und Fehlstellen in dem Bauteil gering und die Baubarkeit von dem groß dimensionierten Bauteil ermöglicht.

Beim alternativen Reibrührschweißen wird mittels eines verschleißfesten, rotierenden Werkzeugs Wärmeenergie in zwei benachbart aneinanderliegende Randkanten eingebracht, wobei das Werkzeug zwischen die Randkanten gedrückt wird. Unter Anpressen der Randkanten an das Werkzeug erwärmen sich die Randkanten bis kurz unterhalb ihres Schmelzpunkts und werden damit plastisch verformbar. Beim Herausziehen des Werkzeugs aus den Randkanten werden ihre Materialien durch die ständige Rotation des Werkzeugs verwirbelt und vermischt. Dadurch bildet sich an den Randkanten nach ihrem Aushärten eine Schweißnaht aus.

Bevorzugt weisen der Stahlguss und/oder der Schmiedestahl eine 0,5 bis 2,5 Cr oder 8 bis 15 Cr Zusammensetzung mit mindestens einem weiteren Legierungselement auf, so dass eine Aufhärtung im Sphäroguss beim Verschweißen der Randabschnitte unterbleibt. Der Stahlguss und/oder der Schmiedestahl hat gemäß dieser Weiterbildung einen Chromanteil von 0,5 bis 2,5% bzw. 8 bis 15% und weist insbesondere mehrere Legierungselemente auf, deren Zusammensetzung eine Aufhärtung im Sphäroguss infolge der Vermischung von Stahl und Sphäroguss in der beim Verschweißen entstehenden Schmelze gering hält.

Das erfindungsgemäße Verfahren kann insbesondere dadurch für eine Reparatur des Bauteils verwendet werden, indem von dem Bauteil ein beschädigter Abschnitt herausgetrennt wird und durch einen neuen Abschnitt ersetzt wird. Der neue Abschnitt wird unter Anwendung des erfindungsgemäßen Verfahrens in das bestehende Bauteil eingeschweißt. Mit dem erfindungsgemäßen Verfahren sind vorteilhaft weitere Werkstoffe, wie beispielsweise Stahlguss oder Schmiedeteile, mit dem Sphäroguss verschweißbar. Ferner ist das erfindungsgemäße Verfahren für Konstruktionsschweißen geeignet.

Beim Verschweißen der Randabschnitte mit dem energiereduzierten Kurzlichtbogen wird bevorzugt ein Schweißprozess mit einem schmalen Schweißbad eingesetzt, um eine kleine Wärmeeinflusszone zu erreichen. Der Schweißprozess ist bevorzugt ein CMT-, ein Cold-Arc-Prozess oder ein dazu vergleichbarer Prozess. Beim Cold-Arc-Prozess folgt der Verlauf der elektrischen Spannung demselben Verlauf, dem die elektrische Spannung beim herkömmlichen Kurzlichtbogenprozess folgt, jedoch dient beim Cold-Arc-Prozess die elektrische Spannung als Führungsgröße für eine Steuerung der Stromstärke. Durch die Nutzung des Verlaufs der elektrischen Spannung als Führungsgröße ist die Stromstärke an den Prozess angepasst steuerbar, wodurch die in den Sphäroguss eingebrachte Energiemenge steuerbar ist. Durch Absenken der Energiemenge unmittelbar vor dem Wiederzünden des Kurzlichtbogens ist das Cold-Arc-Verfahren sanft, wodurch eine sonst thermisch bedingte Strukturveränderung im Sphäroguss vermieden ist. Zudem kann durch ein gezieltes Hochpegeln der Stromstärke nach dem Wiederzünden eine immer gleich große schmelzflüßige Kuppe an der Elektrode erzeugt werden, wodurch der Prozessablauf gleichmäßig und materialschonend verlaufen kann. Die Teilfuge ist bevorzugt als ein Engspalt ausgebildet. Dies erhöht vorteilhaft die Produktivität des Schweißvorgangs und senkt so die Herstellkosten eines derart geschaffenen Bauteils.

Bei dem erfindungsgemäßen Verfahren pendelt der energiereduzierte Kurzlichtbogen während des Schweißprozesses quer zu einer Schweißrichtung, wobei der pendelnde Kurzlichtbogen bevorzugt in Abhängigkeit von seiner Auslenkposition, mittels Verwendung mindestens einer Kennlinie einer zugehörigen Stromquelle hinsichtlich seiner Einbrandtiefe und/oder Abschmelzleistung optimiert wird.

Der beim Verschweißen der Randabschnitte verwendete Schweißzusatzwerkstoff ist bevorzugt auf einer Nickelbasis gebildet, insbesondere mit SG-NiTi4 oder SG-NiCu30MnTi. Durch ein Auflegieren des durch den Schweißvorgang geschmolzenen Sphäroguss mit dem Schweißzusatzwerkstoff lassen sich gezielt die Härte, die Zähigkeit und die Duktilität der Schweißnaht erhöhen. Zudem weist der Nickelbasis-Werkstoff einen niedrigeren Schmelzpunkt und eine höhere Korrosionsbeständigkeit als der Sphäroguss auf. Einem Zerfall der radialsymmetrischen Kristallaggregate (der sog. Sphärolite) des Sphäroguss und der damit einhergehenden Beeinträchtigung der Materialeigenschaften ist somit entgegengewirkt. Das Reibrührschweißverfahren ist bevorzugt beidseitig der Teilfuge durchzuführen wobei dies bei größeren Wanddicken besonders vorteilhaft ist.

Im Folgenden wird eine bevorzugte Ausführungsform eines mit dem erfindungsgemäßen Verfahren hergestellten Bauteils anhand der beigefügten schematischen Zeichnungen erläutert. Es zeigen:
Fig. 1 eine perspektivische Ansicht einer erfindungsgemäßen Ausführungsform des Bauteils,
Fig. 2 einen Querschnitt der Randabschnitte einer ersten Bauteilkomponente und einer zweiten Bauteilkomponente des Bauteils nach einem Herstellungsschritt mit einem Cold-Arc-Prozess und
Fig. 3 einen Querschnitt gemäß Fig. 2 nach dem Herstellungsschritt, wobei das Verschweißen mit einem Reibrührschweißverfahren erfolgt ist.

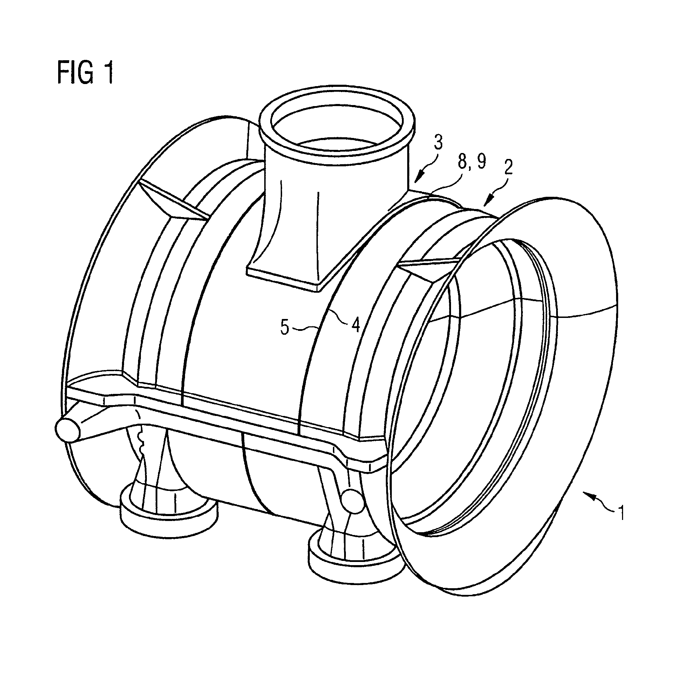

Wie es aus den Fig. 1 bis 3 ersichtlich ist, ist ein Bauteil als ein Dampfturbinen-Niederdruck-Innengehäuse 1 gezeigt. Das Gehäuse 1 setzt sich zusammen aus mehreren Bauteilkomponenten, insbesondere einer ersten Bauteilkomponente 2 und einer zweiten Bauteilkomponente 3. Die Bauteilkomponenten 2, 3 sind aneinander gelegt und bilden eine Teilfuge 8 aus. Ferner sind die Bauteilkomponenten 2, 3 so dimensioniert und gestaltet, dass sie ohne kritische Fehlstellen in ihrem Material aus Sphäroguss herstellbar sind. Alternativ kann eines der Bauteile 2 oder 3 aus einem Stahlwerkstoff mit einer 0,5 bis 2,5 Cr oder 8 bis 15 Cr Zusammensetzung mit mindestens einem weiteren Legierungselement gebildet sein.

Die erste Bauteilkomponente 2 weist einen Randabschnitt 4 auf, der unmittelbar benachbart neben einem Randabschnitt 5 der zweiten Bauteilkomponente 3 angeordnet ist. Der Randabschnitt 4 der ersten Bauteilkomponente 2 ist von einer Randkante 6 begrenzt, die stumpf an einer Randkante 7 anliegt, die den Randabschnitt 5 der zweiten Bauteilkomponente 3 begrenzt. Dadurch ist die Teilfuge 8 von den Randkanten 6, 7 gebildet. Die Teilfuge 8 ist vorliegend als Engspalt-Fuge gebildet.

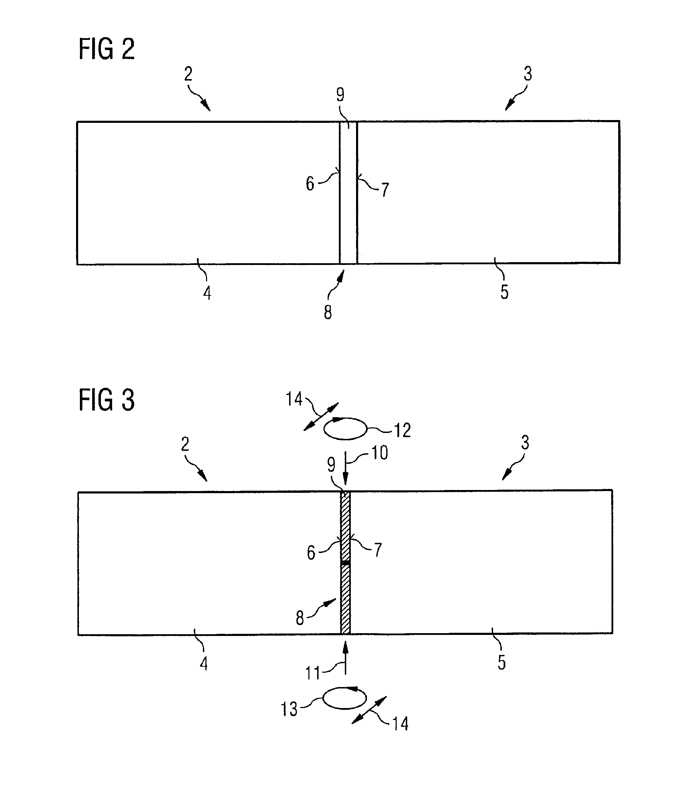

Beim Herstellen des Gehäuses 1 werden die erste Bauteilkomponente 2 und die zweite Bauteilkomponente 3 separat in einem Sphärogussverfahren aus Sphäroguss hergestellt. Dabei ist die Gefahr gering, dass sich in den Bauteilkomponenten 2, 3 kritische Fehlstellen ausbilden. In einem Fertigungsschritt werden die Bauteilkomponenten 2 und 3 mit ihren Randabschnitten 4 und 5 aneinander gelegt, so dass die Teilfuge 8 sich ausbildet. Gemäß Fig. 2 wird die Teilfuge 8 mittels eines Cold-Arc-Prozesses bearbeitet, so dass sich an der Teilfuge 8 eine Schweißnaht 9 ausbildet. Beim Cold-Arc-Prozess wird eine abschmelzende Elektrode mit einem Schweißzusatzwerkstoff auf einer Nickelbasis (SG-NiCu30MnTi oder SG-NiTi4) verwendet. Durch diesen Schweißzusatzwerkstoff werden die verflüssigten Randabschnitte 4 und 5 derart auflegiert, dass eine Strukturveränderung durch einen Zerfall der radialsymmetrischen Kristallaggregate (sog. Sphärolite) des Sphäroguss unterbleibt. Dabei wird das Schweißverfahren so abgestimmt durchgeführt, dass eine hohe Einschweißtiefe, ein schmales Schweißbad sowie eine kleine Wärmeeinflusszone verwendet werden.

Bei einem alternativen Schweißverfahren werden gemäß Fig. 3 die beiden Bauteilkomponenten 2 und 3 mittels eines Reibrührschweißverfahrens zusammengefügt. Dabei wird mittels eines verschleißfesten, rotierenden Werkzeugs (nicht dargestellt) Wärmeenergie in zwei benachbart aneinanderliegende Randkanten 6, 7 eingebracht, wobei das Werkzeug in Richtung des Pfeils 10 zwischen die Randkanten 6, 7 gedrückt wird. Unter Anpressen der Randkanten 6, 7 an das Werkzeug erwärmen sich die Randkanten 6, 7 bis kurz unterhalb ihres Schmelzpunkts und werden damit plastisch verformbar. Beim Herausziehen des Werkzeugs aus den Randkanten 6, 7 werden ihre Materialien durch die ständige Rotation des Werkzeugs verwirbelt und vermischt. Dadurch bildet sich an den Randkanten 6, 7 nach ihrem Aushärten eine Schweißnaht 9 aus. Alternativ dazu erfolgt das Reibrührschweißen beidseitig der Teilfuge 8, wobei zwei Werkzeuge zugleich, eines in Richtung des Pfeils 10 und das andere in Richtung des Pfeils 11, zwischen die Randkanten 6, 7 gedrückt werden. Pfeile 12 und 13 zeigen die jeweilige Rotationsrichtung der beiden Werkzeuge. Pfeil 14 zeigt die Richtungen, in denen die Werkzeuge in dem Teilspalt 8 hin- und herbewegt werden.

Sowohl beim Verschweißen mit dem Cold-Arc-Prozess als auch dem Reibrührschweißverfahren ist ein Zusammenfügen einer Bauteilkomponente aus Sphäroguss mit einer Bauteilkomponente aus einem Stahlwerkstoff, insbesondere einem Guss- oder Schmiedestahl, der Zusammensetzung 0,5 bis 2,5 Cr bzw. 8 bis 15 Cr und weiteren Legierungselementen im Stahlwerkstoff möglich.

## Patentansprüche

1. Verfahren zur Herstellung eines Bauteils aus Sphäroguss, mit den Schritten:
Konstruktion des Bauteils (1) derart, dass das Bauteil (1) aus einer Mehrzahl an Bauteilkomponenten(2, 3) zusammengesetzt ist, die unter Ausbilden von Teilfugen (8) aneinandergelegt sind sowie so dimensioniert und gestaltet sind, dass sie ohne kritische Fehlstellen in ihrem Material aus Sphäroguss gießbar sind;
Herstellen der ersten Bauteilkomponente (2) aus Sphäroguss und der zweiten Bauteilkomponente (3) aus Sphäroguss,
Stahlguss oder Schmiedestahl;
paarweises Bereitstellen der Bauteilkomponenten (2, 3), wobei eine erste der Bauteilkomponenten (2) und eine zweite der Bauteilkomponenten (3) zum benachbarten Aneinanderliegen vorgesehen sind, bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird;
Anlegen der zweiten Bauteilkomponente (3) mit ihrem Randabschnitt (5) an den Randabschnitt (4) der ersten Bauteilkomponente (2), so dass die Randkanten (6, 7) aneinander liegen;
Verschweißen der Randabschnitte (4, 5), so dass die von den Randabschnitten (4, 5) gebildete Teilfuge (8) verschweißt ist und dadurch die erste und die zweite Bauteilkomponente (2, 3) miteinander befestigt sind, wodurch die erste und die zweite Bauteilkomponente (2, 3) zumindest teilweise das Bauteil (1) bilden, wobei beim Verschweißen ein MSG-Schweißverfahren mit einem energiereduzierten Kurzlichtbogen, der mittels einer beim Schweißen abschmelzenden Elektrode erzeugt wird und die Schmelze der Elektrode den Sphäroguss der Randkanten (6, 7) auflegiert, oder ein Reibrührschweißverfahren verwendet wird,
mit dem die Randabschnitte (4, 5) bei minimalem Energieeintrag verschweißt werden, so dass ein Strukturzerfall des Sphäroguss beim Verschweißen der Randabschnitte (4, 5) unterbleibt.

2. Verfahren gemäß Anspruch 1, wobei der Stahlguss und/oder der Schmiedestahl eine 0,5 bis 2,5 Cr oder 8 bis 15 Cr Zusammensetzung mit mindestens einem weiteren Legierungselement aufweisen, so dass eine Aufhärtung im Sphäroguss beim Verschweißen der Randabschnitte (4, 5) unterbleibt.

3. Verfahren gemäß einem der Ansprüche 1 oder 2, wobei beim Verschweißen der Randabschnitte (4, 5) mit dem energiereduzierten Kurzlichtbogen ein Schweißprozess mit einem schmalen Schweißbad eingesetzt wird, um eine kleine Wärmeeinflusszone zu erreichen.

4. Verfahren gemäß Anspruch 3, wobei der Schweißprozess ein CMT- oder ein Cold-Arc-Prozess ist.

5. Verfahren gemäß einem der Ansprüche 1 bis 4, wobei die Teilfuge ein Engspalt ist.

6. Verfahren gemäß einem der Ansprüche 1 bis 5, wobei während des Schweißprozesses der energiereduzierte Kurzlichtbogen quer zu einer Schweißrichtung pendelt und in Abhängigkeit von seiner Auslenkposition des pendelnden Kurzlichtbogens, dieser mittels Verwendung mindestens einer Kennlinie einer zugehörigen Stromquelle hinsichtlich seiner Einbrandtiefe und/oder Abschmelzleistung optimiert wird.

7. Verfahren gemäß einem der Ansprüche 1 bis 6, wobei beim Verschweißen der Randabschnitte (4, 5) ein Schweißzusatzwerkstoff auf einer Nickelbasis verwendet wird, insbesondere SG-NiTi4 oder SG-NiCu30MnTi.

8. Verfahren gemäß Anspruch 1, wobei das Reibrührschweißen beidseitig der beiden Bauteilkomponenten (2, 3) erfolgt.
